# EUROPÄISCHE PATENTSCHRIFT

(11) **EP 3 212 695 B1**
(45) Veröffentlichungstag und Bekanntmachung des Hinweises auf die Patenterteilung: **24.07.2019**
(21) Anmeldenummer: 15785110.6
(22) Anmeldetag: 27.10.2015
(51) Int. Cl.: C08J 5/04, C08J 5/24, C08G 18/10, F41H 5/04, C08G 18/22, C08G 18/24, C08G 18/32, C08G 18/42, C08G 18/44, C08G 18/73

(54) **FASER-KUNSTOFF-VERBUNDE UND ZUSAMMENSETZUNG ZUR HERSTELLUNG SOLCHER FASER-KUNSTSTOFFVERBUNDE**
FIBRE-PLASTIC COMPOSITES AND COMPOSITION FOR PRODUCING SUCH FIBRE-PLASTIC COMPOSITES
COMPOSITES DE FIBRE ET DE PLASTIQUE AINSI QUE COMPOSITION DESTINÉE À LA FABRICATION DE COMPOSITES DE FIBRE ET DE PLASTIQUE

(30) Priorität: 30.10.2014 EP 14191007
(43) Veröffentlichungstag der Anmeldung: 06.09.2017
(73) Patentinhaber: BASF Coatings GmbH, 48165 Münster (DE)
(72) Erfinder: SEEGER, Dirk, 26125 Oldenburg (DE); RAMM, Uli, 49086 Osnabrück (DE); KAUNE, Martin, 26125 Oldenburg (DE)
(74) Vertreter: BASF IP Association
(86) Internationale Anmeldenummer: PCT/EP2015/074798
(87) Internationale Veröffentlichungsnummer: WO 2016/066605

(56) Entgegenhaltungen:
- EP-A1- 0 645 415
- WO-A1-2010/108701
- JP-A- 2006 124 610
- US-A1- 2007 167 600
- US-A1- 2007 194 490
- US-A1- 2013 210 997
- US-B1- 6 964 626

## Beschreibung

Die vorliegende Erfindung betrifft Faser-Kunststoffverbunde bestehend aus mindestens einem Fasermaterial und einer Kunststoffmatrix. Die vorliegende Erfindung betrifft auch eine Zusammensetzung zur Herstellung solcher Faser-Kunststoffverbunde. Die Faser-Kunststoffverbunde weisen eine hervorragende Beständigkeit gegenüber mechanischen Einflüssen, insbesondere gegenüber hochenergetischen, punktuellen Belastungen auf.

### Stand der Technik

In verschiedenen Einsatzbereichen besteht ein Bedarf an Werkstoffen, die hohen mechanischen Ansprüchen genügen. Zu nennen sind beispielsweise die Bereiche Fahrzeugbau, insbesondere Flugzeugbau, und Windenergieanlagen, insbesondere im so genannten Offshore-Bereich. Denn in diesen Anwendungsgebieten sind die eingesetzten Substrate, beispielsweise Rotorblätter von Windenergieanlagen, regelmäßig Einflüssen wie Vogel- und Hagelschlag sowie typischen Erosionseinflüssen wie Regen und Flugsand ausgesetzt. Zu nennen sind aber auch weitere Bereiche, in denen die beschriebene Beständigkeit relevant ist. Beispielhaft sei auf Sicherheitswesten verwiesen, die im Personenschutz vor Einschlägen von Gegenständen mit hohem Impuls, beispielsweise Projektilen, schützen sollen.

Den genannten Anwendungsgebieten gemein ist die Tatsache, dass einerseits mit hochenergetischen, punktuellen Belastungen der verwendeten Werkstoffe zu rechnen ist, anderseits aber ein niedriges Gewicht dieser Werkstoffe ein sehr relevanter Faktor ist. So ist es selbstverständlich, dass beispielsweise Rotorblätter von Windkraftanlagen keine aufwendigen dickwandigen Metallschichten umfassen dürfen, da diese ein enormes Zusatzgewicht ausmachen würden. Selbiges gilt augenscheinlich für den Bereich des Personenschutzes durch Sicherheitswesten.

Um eine gute Beständigkeit gegen mechanische Belastung, insbesondere durch hochenergetische, punktuelle Belastung, zu erreichen, muss der entsprechende Werkstoff eine Reihe von technologischen Eigenschaften erfüllen. Von zentraler Wichtigkeit ist eine angemessene Flexibilität und Elastizität (Zähelastizität) beziehungsweise Schlagzähigkeit des eingesetzten Werkstoffs. Denn bei einem zwar harten, aber spröden Werkstoff kommt es bei punktueller Belastung mit hohem Impuls oft zum spontanen Bruch. Abgesehen von dem eigentlichen Materialversagen stellt die hieraus resultierende Gefahr durch Splitter ein nicht zu unterschätzendes Problem dar.

Die heutzutage wegen ihres vergleichsweise geringen Gewichts oft eingesetzten Faser-Kunststoffverbunde, in denen die Kunststoffmatrix meist auf Epoxidharz- und/oder Polyesterharzsystemen basiert, können aufgrund ihrer oft sprödstarren Ausprägung nicht immer die technologischen Anforderungen erfüllen. Bei entsprechender punktueller Belastung kann es zu Spontanversagen, das heißt Materialbruch, kommen.

Eine Möglichkeit, die grundsätzliche mechanische Beständigkeit zu erhöhen, ist das Aufbringen von speziellen Beschichtungen in oft hohen Schichtdicken auf die eigentlichen Werkstoffe. Dies ist aber aus den schon genannten Gewichtsgründen in vielen Anwendungsbereichen nicht erstrebenswert. Zudem sind gerade bei punktueller Belastung mit hohem Impuls die Eigenschaften des Werkstoffs selbst wichtiger als die Eigenschaften der Beschichtung, da letztere kaum in der Lage ist, einem mit hohem Impuls auftreffenden Gegenstand zu widerstehen.

Auch die Verstärkung von Faser-Kunststoffverbunden durch grundsätzlich mechanisch sehr stabile Metallstrukturen stellt aufgrund der hohen Dichte der Metalle und der damit schon oben beschriebenen Gewichtszunahme keine akzeptable Alternative dar.

### Aufgabe

Der vorliegenden Erfindung lag daher die Aufgabe zugrunde, die zuvor beschriebenen Nachteile des Standes der Technik zu beseitigen. Es sollten Faser-Kunststoffverbunde zur Verfügung gestellt werden, die eine ausgezeichnete Stabilität gegen mechanische Einflüsse, insbesondere gegen punktuelle Belastungen mit hohem Impuls, aufweisen. Auf diese Weise sollten Werkstoffe bereitgestellt werden, die eine hohe mechanische Beständigkeit mit einem akzeptablen Gewicht vereinbaren und somit einen effektiven Einsatz in Bereichen wie dem Fahrzeugbau, insbesondere Flugzeugbau, Windenergieanlagen, insbesondere im so genannten Offshore-Bereich, oder auch dem Personenschutz ermöglichen.

### Lösung

Demgemäß wurden Faser-Kunststoff-Verbunde gefunden, bestehend aus
(I) mindestens einem Fasermaterial
   und
(II) einer Kunststoffmatrix,
dadurch gekennzeichnet, dass die Kunststoffmatrix auf einem Zweikomponenten-Matrixmaterial (IIa) basiert, wobei das Zweikomponenten-Matrixmaterial (IIa)
(1) eine Stammkomponente umfassend
   (A) mindestens ein Polycarbonatdiol mit einer OH-Zahl von 50 bis 500 mg KOH/g sowie
(2) eine Härterkomponente umfassend
   (C) mindestens einen Polyisocyanat-modifizierten Polyester mit einem Isocyanatgehalt von 4 bis 15 %,
umfasst.

Die neuen Faser-Kunststoff-Verbunde sind Gegenstand der vorliegenden Erfindung und werden in der Folge auch als erfindungsgemäße Faser-Kunststoff-Verbunde bezeichnet.

Bevorzugte Ausführungsformen gehen aus der folgenden Beschreibung und den Unteransprüchen hervor.

Gegenstand der vorliegenden Erfindung ist auch eine Zusammensetzung zur Herstellung von erfindungsgemäßen Faser-Kunststoff-Verbunden sowie ein Verfahren
zur Herstellung der Faser-Kunststoff-Verbunde unter Einsatz dieser Zusammensetzung. Nicht zuletzt Gegenstand der vorliegenden Erfindung sind Bauteile, die die erfindungsgemäßen Faser-Kunststoff-Verbunde umfassen beziehungsweise daraus bestehen. Gegenstand der vorliegenden Erfindung ist auch die Verwendung der erfindungsgemäßen Faser-Kunststoff-Verbunde zur Verbesserung der mechanischen Stabilität, insbesondere der Stabilität gegenüber hochenergetischen, punktuellen Belastungen, von Bauteilen.

Die erfindungsgemäßen Faser-Kunststoff-Verbunde weisen eine hervorragende mechanische Stabilität insbesondere gegenüber punktuellen hochenergetischen Belastungen auf und sind demnach besonders gut in Bereichen einzusetzen, in denen die Kombination von hoher mechanischer Stabilität und vergleichsweise geringem Gewicht besonders relevant ist.

### Beschreibung der Erfindung

Bei dem erfindungsgemäßen Faser-Kunststoff-Verbund (auch genannt Faserverbundwerkstoff) handelt es sich der allgemein gültigen Definition folgend um einen Werkstoff, der aus mindestens zwei verschiedenen Materialien beziehungsweise Hauptkomponenten besteht. Neben dem jedenfalls vorhandenen mindestens einen Fasermaterial ist zudem eine Kunststoffmatrix vorhanden, wobei in solchen Faser-Kunststoff-Verbunden das Fasermaterial bekanntermaßen in die Kunststoffmatrix eingebettet ist. Der Kunststoff umgibt also als Matrix die Fasern beziehungsweise stellt die Matrix für die darin eingebetteten Fasern dar.

Als Fasermaterialien kommen an sich alle für den Einsatz in Faser-Kunststoff-Verbunden bekannten Materialien in Frage. Eingesetzt werden können beispielsweise Glasfasern, Kohlenstofffasern, Keramikfasern, Aramidfasern, Basaltfasern, Stahlfasern, Nylonfasern oder Naturfasern wie beispielsweise Sisalfasern. Bevorzugt eingesetzt werden Aramidfasern. Aramidfasern bestehen bekanntermaßen aus linearen, aromatischen Polyamiden. Beispielhaft sei auf das durch Kondensationsreaktion von Terephthaloyldichlorid und Paraphenylendiamin erhältliche Polymer verwiesen.

Die Fasern können als solche eingesetzt werden, das heißt also als an sich bekannte Kurzfasern, Langfasern oder Endlosfasern. Nicht nur möglich, sondern bevorzugt ist im Rahmen der vorliegenden Erfindung aber der Einsatz von Faserhalbzeugen. Gegenüber den vereinzelten Fasern beziehungsweise Faserfilamenten, das heißt also Fasern als solchen, haben die Faserhalbzeuge den Vorteil einer wesentlich besseren Handhabung. Sie werden beispielsweise durch Verweben oder Verflechten von Fasern beziehungsweise Faserfilamenten hergestellt. Bei solchen an sich bekannten Halbzeugen handelt es sich beispielsweise um Gewebe, Gelege, Matten oder Vliese.

Die Kunststoffmatrix der erfindungsgemäßen Faser-Kunststoff-Verbunde basiert auf einem Zweikomponenten-Matrixmaterial, das weiter unten im Detail beschrieben wird. Die Tatsache, dass die Kunststoffmatrix auf einem Zweikomponenten-Matrixmaterial basiert, ist wie folgt zu verstehen und soll auch anhand des Herstellungsprozesses von Faser-Kunststoffverbunden erläutert werden.

Das Matrixmaterial ist ein Zweikomponenten-Matrixmaterial. Dies bedeutet bekanntermaßen, dass im Rahmen der vorliegenden Erfindung die wie unten beschriebene Komponente (1) (Stammkomponente) und die wie unten beschriebene Komponente (2) (Härterkomponente) getrennt voneinander hergestellt und gelagert werden und erst kurz vor der Verarbeitung zusammengegeben werden. Die Verarbeitungszeit beziehungsweise Topfzeit (das heißt die Zeit, in der das Zweikomponenten-Matrixmaterial bei Raumtemperatur (15 bis 25°C, insbesondere 20°C) verarbeitet werden kann, ohne dass beispielsweise durch entsprechende Vernetzungsreaktionen bei Raumtemperatur eine so starke Viskositätserhöhung auftritt, dass keine sinnvolle Verarbeitung mehr möglich ist), ist bekanntermaßen abhängig von den eingesetzten, weiter unten beschriebenen Bestandteilen, die zur schon angesprochenen Vernetzung beziehungsweise Härtung beitragen. Ein originär fluides Zweikomponenten-Matrixmaterial enthält also jedenfalls Bestandteile, die miteinander vernetzen beziehungsweise aushärten können. Insbesondere bevorzugt beträgt die Verarbeitungszeit des Zweikomponenten-Matrixmaterials von 4 bis 25 min, nochmals bevorzugter 6 bis 12 min, wobei sich diese Verarbeitungszeit durch die Menge von wie weiter unten beschriebenen Vernetzungskatalysatoren und den Einsatz von oder gezielten Verzicht auf beispielsweise Chelatbildner(n) für diese Vernetzungskatalysatoren, die durch Blockierung des Katalysators die Reaktionsgeschwindigkeit beeinflussen können, noch in gewissen Grenzen beeinflussen lässt. Der Vorteil eines solchen Zweikomponenten-Matrixmaterials liegt vor allem darin, dass auch bei großen Bauteilen wie Rotorblättern von Windenergieanlagen eine einfache Verarbeitung möglich ist, insbesondere keine hohen Temperaturen zur Härtung notwendig sind. Bevorzugt wird das erfindungsgemäß einzusetzende Matrixmaterial bei nicht mehr als 80°C, bevorzugt nicht mehr als 60°C, insbesondere bevorzugt bei 15 bis 60°C gehärtet.

Unter Aushärten beziehungsweise Härtung ist das dem Fachmann bekannte Vorgehen zu verstehen, das heißt die Überführung einer noch fluiden oder zumindest noch hochviskosen oder klebrigen Zusammensetzung in den gebrauchsfertigen Zustand, das heißt also in einen Zustand, in der das entstehende Produkt transportiert, gelagert und bestimmungsgemäß verwendet werden kann. Diese Härtung erfolgt bei einem Zweikomponenten-Matrixmaterial insbesondere durch chemische Reaktion (die schon angesprochene Vernetzung) von reaktiven funktionellen Gruppen der enthaltenen Bestandteile, die als Bindemittelbestandteile in dem Matrixmaterial enthalten sind. Insbesondere zu nennen sind damit im Rahmen der vorliegenden Erfindung die Reaktionen der Hydroxylgruppen des unten beschriebenen Polycarbonats (A) sowie der Aminogruppen des unten beschriebenen Diamins (B) mit den Isocyanatgruppen des unten beschriebenen Polyisocyanat-modifizierten Polyesters (C). Durch diese Vernetzungsreaktionen und die parallel erfolgende Evaporation von gegebenenfalls vorhandenen Lösemitteln erfolgt die Härtung und wird eine Kunststoffmatrix gebildet.

Die Herstellung von Faser-Kunststoff-Verbunden, bei denen die Kunststoffmatrix auf solchen vernetzenden Matrixmaterialien basieren, umfasst (i) das Inkontaktbringen des Matrixmaterials mit dem Fasermaterial, beispielsweise durch Vermischung der Materialien und/oder Tränkung der Fasern oder Faserhalbzeuge mit dem Matrixmaterial sowie (ii) die anschließende Ausbildung der Kunststoffmatrix durch Härtung des Matrixmaterials. Bei dieser Härtung erfolgt die schon angesprochene Vernetzung der weiter unten angegebenen Bestandteile des Matrixmaterials.

Die für die Vernetzungsreaktionen notwendige Aktivierung erfolgt in der Regel thermisch, das heißt die notwendige Energie kann durch einfaches Zuführen thermischer Energie in das System eingebracht werden. Der Vorteil eines Zweikomponenten-Matrixmaterials wie dem erfindungsgemäß einzusetzenden Matrixmaterial liegt aber, wie schon oben beschrieben, vor allem darin, dass keine hohen Temperaturen zur Härtung notwendig sind. Bevorzugt wird das erfindungsgemäß einzusetzende Matrixmaterial nach dem Inkontaktbringen mit dem Fasermaterial bei nicht mehr als 80°C, bevorzugt nicht mehr als 60°C, insbesondere bevorzugt bei 15 bis 60°C gehärtet. Denn die weiter unten beschriebenen, miteinander vernetzenden Bestandteile des Matrixmaterials sind so reaktiv, dass bereits bei den genannten Temperaturen eine thermische Aktivierung erfolgt und damit die Härtung möglich ist.

Die Zeitdauer, die für eine Härtung benötigt wird, kann je nach gewählten Härtungsbedingungen, insbesondere Härtungstemperaturen, stark variieren. Bei höheren Härtungstemperaturen ist die Härtung selbstverständlich schneller erreicht.

Typische Herstellungsverfahren von Faser-Kunststoff-Verbunden, die die oben beschriebenen Schritte (i) und (ii), das heißt (i) das Inkontaktbringen des Matrixmaterials mit dem Fasermaterial und (ii) die anschließende Ausbildung der Kunststoffmatrix durch Härtung des Matrixmaterials, umfassen, sind bekannt.

So kann die Herstellung im Rahmen der vorliegenden Erfindung beispielsweise durch Handlegeverfahren, gegebenenfalls in Kombination mit Vakuumpressen, über das Prepreg-Verfahren oder das Vakuum-Infusionsverfahren erfolgen. Diese Verfahren eignen sich insbesondere zur Herstellung von Faser-Kunststoff-Verbunden in Form von Laminaten, das heißt der Faser-Kunstsoff-Verbund umfasst flächig miteinander verbundene Schichten, beispielsweise durch den Einsatz von Faserhalbzeugen wie Fasermatten.

Möglich ist die Herstellung der Faser-Kunststoff-Verbunde auch durch Spritzgussverfahren, beispielsweise durch das Spritzpressen oder Strangziehverfahren. Solche Verfahren bieten sich für die Herstellung von Faser-Kunststoff-Verbunden beziehungsweise daraus bestehenden Bauteilen mit komplexer Form an.

Die Faser-Kunststoff-Verbunde können zudem in Form der an sich bekannten Sheet Molding Compounds (SMCs) hergestellt werden. Dabei werden mit Matrixmaterial getränkte Fasermatten, in denen das Matrixmaterial durch eine gezielte Vorvernetzung in einen bereits hochviskosen, wachartigen Zustand überführt vorliegt, durch Pressverfahren in beheizbaren Werkzeugen beziehungsweise Formen miteinander verpresst, wobei dann die Härtung des Matrixmaterials und damit die Ausbildung der Kunststoffmatrix realisiert wird.

Alle genannten Verfahren sind an sich bekannt und bedürfen keiner noch detaillierteren Erläuterung.

Aus oben Gesagtem folgt, dass die Kunststoffmatrix der erfindungsgemäßen Faser-Kunststoff-Verbunde durch Härtung des Zweikomponenten-Matrixmaterials ausgebildet wird. Die Kunststoffmatrix basiert also auf eben diesem Zweikomponenten-Matrixmaterial. Der Ausdruck "die Kunststoffmatrix basiert auf dem Zweikomponenten-Matrixmaterial" ist also gleichbedeutend mit dem Ausdruck "die Kunststoffmatrix ist durch Härtung des Zweikomponenten-Matrixmaterials herstellbar".

Die erfindungsgemäßen Bauteile, die aus einem erfindungsgemäßen Faser-Kunststoffverbund bestehen oder einen solchen umfassen, können je an sich jede beliebige Größe, Form und Ausgestaltung besitzen. Bevorzugt handelt es sich um Bauteile, die eine ausgezeichnete Stabilität gegen mechanische Einflüsse, insbesondere gegen punktuelle Belastungen mit hohem Impuls, aufweisen müssen, um dem jeweils geforderten technologischen Anforderungsprofil gerecht zu werden. Bevorzugte Bauteile sind beispielsweise Rotorblätter von Windenergieanlagen, Fahrzeugbauteile und Sicherheitswesten.

In der Folge wird das erfindungsgemäß einzusetzende Matrixmaterial beschrieben.

Es handelt sich um ein Zweikomponenten-Matrixmaterial umfassend eine Stammkomponente und eine Härterkomponente. Bei den Bestandteilen, die wie oben beschrieben miteinander vernetzen können und damit zur Härtung beitragen, handelt es sich insbesondere um Polycarbonatdiole (A), wahlweise Diamine (B) und Polyisocyanat-modifizierte Polyester (C).

Das Zweikomponenten-Matrixmaterial enthält mindestens ein Polycarbonatdiol (A) in der Stammkomponente (1).

Polycarbonatdiole sind formal betrachtet Veresterungsprodukte, die durch Umsetzung von Kohlensäure mit Polyolen entstehen können. In der Praxis werden die Carbonatstrukturen bekanntermaßen mit Hilfe von Phosgen oder Kohlensäurediestern unter gängigen Reaktionsbedingungen eingeführt. Die Umsetzung mit Diolen, beispielsweise mit 3-Methyl-1,5-pentandiol oder 1,6-Hexandiol, führt dann zu den Polycarbonatdiolen. Selbstverständlich können solche Polycarbonatdiole neben den die Ausgangskomponenten verbindenden Carbonatfunktionen anteilig auch weitere funktionelle Gruppen wie Ester- oder Ethergruppen enthalten, je nach Art und Menge der eingesetzten Ausgangsverbindungen. Vorzugsweise handelt es sich bei dem Polycarbonatdiol um ein lineares Polycarbonatdiol. Bevorzugt sind die Hydroxylgruppen endständig, das heißt an beiden Enden des bevorzugt linearen Polycarbonatdiols angeordnet (hydroxyl-terminiertes Polycarbonatdiol). Ganz besonders bevorzugt handelt es sich um ein aliphatisches Polycarbonatdiol. Das Polycarbonatdiol enthält also bevorzugt keine aromatischen Gruppen, da diese eine deutlich eingeschränkte UV-Beständigkeit aufweisen.

Die Polycarbonatdiole (A), insbesondere die linearen, aliphatischen Polycarbonatdiole, besitzen eine OH-Zahl von 50 bis 500 mg KOH/g, bevorzugt 100 bis 400 mg KOH/g, insbesondere 150 bis 250 mg KOH/g (gemessen nach DIN 53240). Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Da es sich bei den Polycarbonaten (A) um diolische Komponenten handelt, sind die OH-Zahl und das zahlenmittlere Molekulargewicht der Komponenten voneinander abhängig beziehungsweise die angegebene OH-Zahl lässt Rückschlüsse auf das zahlenmittlere Molekulargewicht zu. Ein hohes zahlenmittleres Molekulargewicht würde mit einer eher niedrigen OH-Zahl einhergehen. Das zahlenmittlere Molekulargewicht kann breit variieren und liegt im Bereich von beispielsweise 220 g/mol bis 2250 g/mol (gemessen mittels GPC-Analyse mit THF (+0,1% Essigsäure) als Eluent (1 ml/min) auf einer Styrol-Divinylbenzol-Säulenkombination, Kalibrierung mit Polystyrol-Standards).

Geeignete Polycarbonatdiole (A) werden beispielsweise unter der Produktlinie DURANOL™ (Fa. Asahi Kasei), Desmophen® von der Firma Bayer MaterialScience AG (Leverkusen, Deutschland) oder Eternacoll® (UBE) angeboten.

Der Anteil der Polycarbonate (A) liegt vorzugsweise im Bereich von 10 bis 70 Gew.-%, bevorzugt 15 bis 60 Gew.-%, besonders bevorzugt 20 bis 50 Gew.-%, jeweils bezogen auf das Gesamtgewicht des erfindungsgemäß einzusetzenden Matrixmaterials.

Das Zweikomponenten-Matrixmaterial enthält in der Stammkomponente (1) bevorzugt mindestens ein aliphatisches, aromatisches oder araliphatisches (gemischt aliphatischaromatisches) Diamin (B) mit primären und/oder sekundären Aminogruppen.

Insbesondere durch den Zusatz eines solchen Diamins (B) und dessen Kombination mit einem Polycarbonatdiol (A) sowie einem Polyisocyanat-modifizierten Polyester (C) resultiert eine Kunststoffmatrix, die in Kombination mit Fasern zu einem Faser-Kunststoff-Verbund mit stark verbesserter mechanischer Beständigkeit führt.

Die Aminogruppen können primär und/oder sekundär sein. Es enthält also zwei primäre, zwei sekundäre oder eine primäre und eine sekundäre Aminogruppe. Bevorzugt sind sekundäre Aminogruppen.

Die Diamine (B) haben bevorzugt eine Aminzahl von 300 bis 500 mg KOH/g, nochmals bevorzugt 350 bis 450 mg KOH/g, insbesondere von 380 bis 430 mg KOH/g (gemessen mittels DIN EN ISO 15880).

Da es sich bei den Diaminen (B) um Komponenten mit genau zwei Aminogruppen handelt, sind die Aminzahl und das Molekulargewicht der Komponenten voneinander abhängig beziehungsweise die angegebene Aminzahl lässt Rückschlüsse auf das Molekulargewicht zu. Ein hohes Molekulargewicht würde mit einer eher niedrigen Aminzahl einhergehen.

Typische araliphatische Diamine (B), die im Rahmen der vorliegenden Erfindung eingesetzt werden können, sind beispielsweise die unter dem Handelsnamen Ethacure® erhältlichen Diamine, insbesondere 3,5-Diethyltoluol-2,4-diamin und/oder 3,5-Diethyltoluol-2,6-diamin.

Bevorzugt ist im Rahmen der vorliegenden Erfindung aber der Einsatz von sekundäre Aminogruppen aufweisenden Diaminen (B) mit einer aliphatischen Gruppe (b1) zwischen den Stickstoffatomen der Aminogruppen.

Ein solches bevorzugtes Diamin weist als funktionelle Gruppen jedenfalls sekundäre Aminogruppen auf. Demnach enthält es ausschließlich sekundäre Aminogruppen, nämlich genau zwei sekundäre Aminogruppen.

Der Vorteil der sekundären Aminogruppen liegt insbesondere in der verbesserten, das heißt leicht verlängerten Verarbeitungszeit des Zweikomponenten-Matrixmaterials. Zwar werden genauso gute anwendungstechnische Eigenschaften erreicht wie bei der Verwendung von primären Aminen, jedoch bedeutet die längere Verarbeitungszeit einen nochmals bedeutsamen technischen Vorteil dieser bevorzugten Systeme.

Sekundäre Aminogruppen besitzen bekanntermaßen genau einen Wasserstoffrest am Stickstoffatom. Zudem sind zwei entsprechende organische Reste (beziehungsweise organische Gruppen) R₁ und R₂ vorhanden, welche über ein Kohlenstoffatom an den Stickstoff gebunden sind. Diese organischen Reste R₁ und R₂ können dann letztlich beliebig gewählt sein, solange der Charakter als Amin erhalten bleibt. Beispielsweise möglich sind Alkylgruppen, Arylgruppen und Alkenylgruppen, welche auch substituiert sein können, das heißt anstelle von an Kohlenstoff gebundenem Wasserstoff an diesen Positionen unterschiedliche weitere funktionelle Gruppen wie Hydroxylgruppen oder Nitrilgruppen enthalten können. Nicht möglich wäre bekanntermaßen eine Acylgruppe in alpha-Stellung zum Stickstoffatom, da dann ein Amid, aber kein Amin vorhanden wäre.

In den organischen Resten R₁ und R₂ einer sekundären Aminogruppe können selbstverständlich auch verbrückende Heteroatome beziehungsweise verbrückende Gruppen enthaltend Heteroatome enthalten sein, solange der Charakter als Amin bewahrt bleibt. Beispielhaft seien Etherbindungen oder Esterbindungen genannt.

Ein wie beschriebener organischer Rest R₁ oder R₂ kann natürlich auch zwischen zwei Stickstoffatomen von zwei Aminogruppen angeordnet sein. In einem dann beispielsweise bestehenden Diamin stellt dieser Rest dann einen organischen Rest für beide Aminogruppen dar. Dies ist beispielsweise in dem erfindungsgemäß einzusetzenden Diamin (B) für den Rest (b1) der Fall.

Zwischen den Stickstoffatomen der sekundären Aminogruppen des bevorzugten Diamins ist eine aliphatische Gruppe (b1) angeordnet.

Aliphatische Verbindungen sind bekanntermaßen acyclische oder cyclische, gesättigte oder ungesättigte Kohlenstoffwasserstoffverbindungen, die nicht aromatisch sind beziehungsweise keinerlei aromatische Anteile enthalten. Der Begriff aliphatische Verbindung umfasst also acyclische und cyclische Aliphaten (Cycloaliphaten) und gilt auch im Rahmen der vorliegenden Erfindung als entsprechender Oberbegriff. Die acyclischen Aliphaten können linear oder verzweigt sein. Linear bedeutet in diesem Zusammenhang bekanntermaßen, dass die jeweilige Verbindung keine Verzweigungen hinsichtlich der Kohlenstoffkette aufweist, sondern die Kohlenstoffatome ausschließlich in linearer Abfolge in einer Kette angeordnet sind. Verzweigt beziehungsweise nicht-linear bedeutet damit im Rahmen der vorliegenden Erfindung, dass die jeweils betrachtete Verbindung eine Verzweigung in der Kohlenstoffkette aufweist, das heißt also anders als bei den linearen Verbindungen mindestens ein Kohlenstoffatom der jeweiligen Verbindung ein tertiäres oder quartäres Kohlenstoffatom ist. Als cyclische Aliphaten beziehungsweise Cycloaliphaten werden solche Verbindungen bezeichnet, in denen zumindest ein Teil der vorhandenen Kohlenstoffatome im Molekül so verknüpft sind, dass einer oder mehrere Ringe ausgebildet werden. Natürlich können neben dem einen oder den mehreren Ringen weitere acyclische lineare oder verzweigte aliphatische Gruppen in einem Cycloaliphaten vorhanden sein.

Eine aliphatische Gruppe (beziehungsweise ein aliphatischer Rest, die Begriffe Gruppe und Rest werden äquivalent verwendet) ist demzufolge eine Gruppe, die die oben für die aliphatischen Verbindungen genannten Voraussetzungen erfüllt, jedoch nur ein Teil eines Moleküls ist. So ist die (offensichtliche zweibindige) aliphatische Gruppe (b1) zwischen den Stickstoffatomen der Aminogruppen in dem Diamin (B) offensichtlich nur ein Teil des Gesamtmoleküls. Zusätzlich sind die Stickstoffatome sowie die beiden weiteren organischen Reste der beiden sekundären Aminogruppen vorhanden.

Beispiele für aliphatische Gruppen sind lineare, verzweigte oder cyclische Alkylgruppen.

Bevorzugt sind die aliphatischen Gruppen (b1) gesättigt. Dabei kann es sich dann um gesättigte acyclische und cyclische aliphatische Gruppen handeln. Die aliphatischen Gruppen (b1) besitzen bevorzugt 4 bis 30 Kohlenstoffatome, insbesondere 6 bis 18 Kohlenstoffatome. Besonders bevorzugt sind cyclische aliphatische Gruppen (b1), insbesondere solche mit 6 bis 18 Kohlenstoffatomen. Ein ganz besonders bevorzugter aliphatischer Rest (b1) hat die folgende Formel (FI).

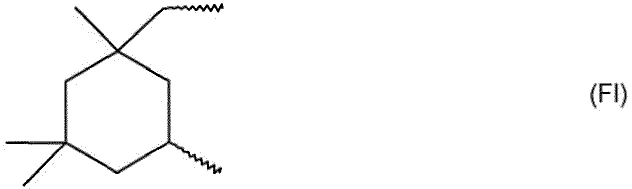

Dieser Rest lässt sich bei einer wie unten beschriebenen Herstellung des bevorzugten Diamins (B) durch den Einsatz des entsprechenden primären Diamins Isophorondiamin einführen.

An beide Stickstoffatome des bevorzugten Diamins (B) ist neben dem zweibindigen Rest (b1) und dem jeweils vorhandenen Wasserstoff noch jeweils ein weiterer organischer Rest (b2) angebunden. Diese Reste können, unabhängig voneinander, an sich beliebig gewählt sein, solange der Charakter als Amin erhalten bleibt. Es kann sich demnach um gegebenenfalls substituierte aliphatische, aromatische oder araliphatische Reste beziehungsweise Gruppen handeln. Eine araliphatische Gruppe ist eine Gruppe mit sowohl aliphatischen als auch aromatischen Anteilen. Bevorzugt sind die Reste (b2) nicht aromatisch beziehungsweise enthalten keine aromatischen Anteile. Insbesondere bevorzugt sind die Amine (B) also vollständig frei von jeglichen aromatischen Gruppen beziehungsweise Anteilen.

Bevorzugt handelt es sich bei den Resten (b2) um gegebenenfalls substituierte Alkylgruppen. Ein Beispiel für eine nicht substituierte Alkylgruppe ist eine Methyl- oder eine Ethylgruppe. Ein Beispiel für eine substituierte Alkylgruppe ist eine Ethylgruppe, in der ein Wasserstoffatom durch eine Nitrilgruppe substituiert ist. Beispielsweise sei der Rest -CH₂CH₂-CN genannt. Ein weiteres Beispiel wäre ein Alkylrest, der über eine Esterbindung mit einem weiteren Alkylrest verbunden ist. Beispielhaft sei der substituierte Rest -CH₂CH₂-C(O)-O-CH₃ genannt. Die gegebenenfalls substituierten Alkylgruppen enthalten bevorzugt 2 bis 10, insbesondere 2 bis 4 Kohlenstoffatome in Alkyleinheiten. Beispielsweise der Rest -CH₂CH₂-CN enthält zwei Kohlenstoffatome in Alkyleinheiten. Der Rest -CH₂CH₂-C(O)-O-CH₃ enthält drei solche Kohlenstoffatome, denn ein Kohlenstoffatom liegt nicht in einer Alkyleinheit, sondern in einer Esterbindung vor.

Die bevorzugten Diamine (B) können auf wie weiter unten noch genauer beschriebene einfache und effiziente Weise durch die Umsetzung von primären Diaminen (enthaltend zwei primäre Aminogruppen sowie eine dazwischen angeordnete aliphatische Gruppe (b1)) mit Acrylsäurederivaten durch an sich bekannte nukleophile Addition des Amins an die Kohlenstoff-Kohlenstoff-Doppelbindung der Acrylgruppe des Acrylsäurederivats hergestellt werden. Bekanntermaßen muss zur Realisierung einer solchen nukleophilen Umsetzung ein möglichst effektiver elektronenziehender Effekt auf die Kohlenstoff-Kohlenstoff-Doppelbindung bewirkt werden. Dies gelingt durch den Einsatz von insbesondere Acrylnitril oder Acrylsäureestern, insbesondere C₁-C₆-Alkylsäureestern, bevorzugt Methylacrylat und Ethylacrylat. Ganz besonders bevorzugt ist Acrylnitril.

Aus oben Gesagtem folgt, dass die Reste (b2) bevorzugt ausgewählt werden aus der Gruppe bestehend aus -CH₂CH₂-CN sowie -CH₂CH₂-C(O)-O-CₙH₂ₙ₊₁ mit n = 1 bis 6, bevorzugt n = 1 bis 2. Denn genau diese Reste (b2) resultieren, wenn man bei der nukleophilen Addition die bevorzugten Acrylsäurederivate eingesetzt werden. Ganz besonders bevorzugt ist der Rest -CH₂CH₂-CN.

Besonders bevorzugte Diamine (B) lassen sich also durch die folgende Formel (FII) beschreiben:

(b2)-NH-(b1)-NH-(b2) (FII)

mit
(b1) = aliphatische Gruppe mit 4 bis 30 Kohlenstoffatomen, insbesondere bevorzugt cyclische aliphatische Gruppe mit 6 bis 18 Kohlenstoffatomen, ganz besonders bevorzugt aliphatische Gruppe der Formel (I),
(b2) = unabhängig voneinander, -CH₂CH₂-CN und/oder -CH₂CH₂-C(O)-O-CₙH₂ₙ₊₁ mit n = 1 bis 6, bevorzugt -CH₂CH₂-CN.

Die bevorzugten Diamine (B) haben bevorzugt eine Aminzahl von 300 bis 500 mg KOH/g, insbesondere von 350 bis 450 mg KOH/g (gemessen mittels DIN EN ISO 15880).

Die Herstellung dieser bevorzugten Diamine (B) kann auf an sich bekannte Weise verlaufen, beispielsweise durch nukleophile Addition von zwei Äquivalenten Acrylsäurederivat an ein Äquivalent Diamin mit zwei primären Aminogruppen. Eine solche Herstellung wird beispielsweise in der Offenlegungsschrift WO 2007/031534 A1 beschrieben.

Bevorzugt erfolgt die Herstellung dieser Diamine (B) also über die nukleophile Addition von Acrylderivaten an primäre Diamine. Dabei werden bevorzugt die oben genannten Acrylderivate eingesetzt, nämlich Acrylnitril und/oder Acrylsäureester, insbesondere C₁-C₆-Alkylsäureester. Die primären Diamine werden bevorzugt so ausgewählt, dass das Diamin (B) nach der Umsetzung die oben genannten bevorzugten aliphatischen Gruppen (b1) enthält. Beispielhaft seien als Amine genannt: Isophorondiamin, 3,3'-Dimethyl-4,4'diaminodicyclohexylmethan, 4,4'-Diaminodicyclohexylmethan, 4,4'-Diaminodiphenylmethan, Hexamethylendiamin und 2-Methylpentamethylendiamin. Bevorzugt sind also Isophorondiamin, 3,3'-Dimethyl-4,4'diaminodicyclohexylmethan, 4,4'-Diaminodicyclohexylmethan, Hexamethylendiamin und 2-Methylpentamethylendiamin. Ganz besonders bevorzugt sind die genannten cycloaliphatischen primären Diamine, insbesondere Isophorondiamin. Dieses primäre Diamin enthält augenscheinlich den ganz besonders bevorzugten Rest (b1) der Formel (I).

Der Anteil der Diamine (B), bevorzugt der sekundäre Aminogruppen aufweisenden Diamine (B) mit einer aliphatischen Gruppe (b1) zwischen den Stickstoffatomen der Aminogruppen, liegt vorzugsweise im Bereich von 0,7 bis 7,0 Gew.-%, bevorzugt 1,0 bis 6,0 Gew.-%, besonders bevorzugt 1,5 bis 5,0 Gew.-%, jeweils bezogen auf das Gesamtgewicht des erfindungsgemäß einzusetzenden Matrixmaterials.

Das Zweikomponenten-Matrixmaterial enthält, und zwar in der Härterkomponente (2), mindestens einen Polyisocyanat-modifizierten Polyester (C) mit einem Isocyanatgehalt von 4 bis 15 %.

Polyester sind bekannt. Es handelt sich um polymere Harze, die durch Umsetzung mehrwertiger organischer Polyole und mehrwertiger organischer Carbonsäuren hergestellt werden. Die Polyole und Polycarbonsäuren werden dabei durch Veresterung, das heißt also durch Kondensationsreaktionen, miteinander verknüpft. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Bevorzugt handelt es sich bei dem zu modifizierenden Polyester um ein Polylactonpolymer, das heißt also ein in der Regel durch ringöffnende Polymerisation von Lactonen wie insbesondere epsilon-Caprolacton hergestelltes Polymer. Dabei werden in der Regel als Starter beziehungsweise Katalysator organische Alkohole, meist Diole, eingesetzt. Das resultierende Polylactonpolymer besitzt dann im Falle des Einsatzes von Diolen zwei endständige Hydroxylgruppen. Jedenfalls aber besitzt das Polymer eine Hydroxylgruppe, die durch die letzte Ringöffnung entsteht. Solche Polyester sind also linear-aliphatische und gesättigte Polyester mit mindestens einer Hydroxylgruppe. Geeignete Lactone zur Herstellung des Polylactonpolymers sind beta-Propiolacton, gamma-Butyrolacton, gamma-Valerolaction, epsilon-Caprolacton oder Methyl-epsilon-caprolacton, vorzugsweise gamma-Butyrolacton und epsilon-Caprolacton, besonders bevorzugt epsilon-Caprolacton. Geeignete Starteralkohole sind Neopentylglykol, Ethylenglykol, Diethylenglykol oder Trimethylolpropan.

Bevorzugt ist der zu modifizierende Polyester demnach ein linear-aliphatischer hydroxylgruppenhaltiger Polyester, darunter bevorzugt ein gesättigter Polyester. Der zu modifizierende Polyester ist ganz besonders bevorzugt ein Polycaprolactonpolymer.

Der Polyester, insbesondere der linear-aliphatische und gesättigte Polyester mit mindestens einer Hydroxylgruppe, besonders bevorzugt das Polycaprolactonpolymer, ist Polyisocyanat-modifiziert und hat einen Isocyanatgehalt von 4 bis 15 %.

Dies bedeutet, dass der wie oben beschriebene zu modifizierende Polyester mit einem Polyisocyanat modifiziert ist, das heißt unter Ausbildung kovalenter Bindungen umgesetzt wird, wobei nach der Reaktion jedoch jedenfalls freie Isocyanatgruppen übrig bleiben. Insbesondere bevorzugt wird ein Diisocyanat zur Modifizierung eingesetzt. Augenscheinlich muss der Polyester also mit Isocyanatgruppen reaktive funktionelle Gruppen enthalten, beispielsweise Hydroxylgruppen- oder Aminogruppen. Aus oben Gesagten folgt, dass es sich dabei bevorzugt um Hydroxylgruppen handelt. Nach der Umsetzung ist das Polyisocyanat in diesem Fall dann über eine Urethangruppe mit dem Polyester verknüpft. Die entsprechenden Reaktionen und Reaktionsbedingungen sind grundsätzlich bekannt.

Als zur Modifizierung einzusetzende Polyisocyanate können die an sich bekannten Verbindungen wie aliphatische und aromatische Polyisocyanate, insbesondere Diisocyanate und deren Dimere und Trimere wie Uretdione und Isocyanurate eingesetzt werden. Beispielhaft sei auf Hexamethylendiisocyanat, Octamethylendiisocyanat, Decamethylendiisocyanat, Dodecamethylendiisocyanat, Tetradecamethylendiisocyanat, Trimethylhexan-diisocyanat, Tetramethylhexandiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan, Diisocyanate oder Mischungen aus diesen Polyisocyanaten sowie auf die an sich bekannten Dimere und/oder Trimere der genannten Polyisocyanate, das heißt also beispielsweise Uretdione und Isocyanurate der oben genannten Polyisocyanate, verwiesen. Bevorzugt werden aliphatische Polyisocyanate, insbesondere aliphatische Diisocyanate, eingesetzt. Insbesondere bevorzugt werden keine aromatischen Polyisocyanate eingesetzt. Ein besonders bevorzugtes Polyisocyanat ist Hexamethylendiisocyanat (HDI).

Der Polyisocyanat-modifizierte Polyester besitzt einen Isocyanatgehalt von 4 bis 15 %, bevorzugt 5 bis 12 %, insbesondere bevorzugt 6 bis 10 %. Der Isocyanatgehalt wird im Rahmen der vorliegenden Erfindung gemäß DIN EN ISO 11909 durch Umsetzung der jeweiligen Probe mit überschüssigem Dibutylamin und Rücktitration des Überschusses mit Salzsäure gegen Bromphenolblau bestimmt.

Das gewichtsmittlere Molekulargewicht der Komponente (C) liegt beispielsweise im Bereich von 500 bis 10000 g/mol wie insbesondere 1000 bis 4000 g/mol.

Entsprechende Produkte sind im Handel, beispielsweise in lösemittelfreier Form oder als Lösung in an sich bekannten und weiter unten beschriebenen Lösemitteln, erhältlich und können ohne weiteres in der Härterkomponente des erfindungsgemäß einzusetzenden Matrixmaterials eingesetzt werden. Beispielhaft sei auf Produkte der Handelsbezeichnung Tolonate™ (Fa. Vencorex), Desmodur® (Fa. Bayer) oder Adiprene® (Fa. Chemtura) verwiesen.

Der Anteil des mindestens einen Polyisocyanat-modifizierten Polyesters (C) liegt vorzugsweise im Bereich von 20 bis 80 Gew.-%, bevorzugt 30 bis 75 Gew.-%, besonders bevorzugt 40 bis 70 Gew.-%, jeweils bezogen auf das Gesamtgewicht des erfindungsgemäß einzusetzenden Matrixmaterials.

Als weitere Bestandteile kann das erfindungsgemäße Matrixmaterial unterschiedlichste dem Fachmann auf dem Gebiet in diesem Zusammenhang bekannte Bestandteile enthalten.
Bevorzugt ist allerdings, dass die Komponenten (A) und (C) insgesamt einen Anteil von mindestens 60 Gew.-%, insbesondere bevorzugt mindestens 70 Gew-%, nochmals bevorzugt mindestens 80 Gew.-%, darunter bevorzugt mindestens 85 Gew.-%, bezogen auf das Gesamtgewicht des Matrixmaterials, ausmachen.

Das Matrixmaterial kann organische Lösemittel und/oder Wasser enthalten. Organische Lösemittel sind aliphatische und/oder aromatische Kohlenwasserstoffe wie Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglycolacetat, Pentylacetat, Methoxypropylacetat oder Ethylethoxypropionat, Ether, Alkohole, Chlorkohlenwasserstoffe oder Mischungen aus den vorgenannten Lösemitteln.

Es ist aber von besonderem Vorteil, dass das erfindungsgemäße Matrixmaterial lösemittelfrei hergestellt werden kann. Die ansonsten enthalten Bestandteile lassen trotzdem eine wie weiter oben beschriebene Verarbeitung zu. Auf diese Weise weist das Matrixmaterial insbesondere durch Vermeidung von organischen Lösemitteln auch ein hochwertiges ökologisches Profil auf. Der Ausdruck "Iösemittelfrei" ist dem Fachmann grundsätzlich bekannt. Bevorzugt ist darunter zu verstehen, dass das Matrixmaterial weniger als 10 Gew.-% organische Lösemittel enthält. Bevorzugt sind weniger als 7,5 Gew.-% organische Lösemittel, insbesondere bevorzugt weniger als 5 Gew.-% organische Lösemittel, ganz besonders bevorzugt weniger als 2,5 Gew.-% organische Lösemittel, vorhanden. Die Angaben beziehen sich jeweils auf das Gesamtgewicht des Matrixmaterials. Organische Lösemittel werden also bevorzugt nicht explizit zugegeben, um beispielsweise die Viskosität des Materials anzupassen. Sie werden dann nämlich lediglich, wenn überhaupt, durch den Einsatz von beispielsweise typischen Additiven, welche gegebenenfalls in organischen Lösemitteln gelöst kommerziell erworben werden können, in geringen Mengen in dem Matrixmaterial eingesetzt. Bevorzugt enthält das Matrixmaterial auch kein Wasser beziehungsweise nur untergeordnete Mengen an Wasser (wasserfrei). Insbesondere bevorzugt ist weniger als 1,0 Gew.-%, bevorzugt weniger als 0,2 Gew.-%, nochmals bevorzugt weniger als 0,01 Gew.-% Wasser, bezogen auf das Gesamtgewicht des Matrixmaterials, enthalten. Es wird also bevorzugt lediglich, wenn überhaupt, durch den Einsatz von beispielsweise typischen Additiven, in dem Material eingesetzt.

Das erfindungsgemäß einzusetzende Matrixmaterial kann neben dem mindestens einen Polyisocyanat-modifizierten Polyester (C) mit einem Isocyanatgehalt von 4 bis 15 % noch mindestens eine weitere, davon verschiedene Isocyanatgruppen enthaltene Komponente enthalten. Bevorzugt ist allerdings, dass die Komponente (C) in einem Anteil von mindestens 50 Gew.-%, insbesondere bevorzugt mindestens 70 Gew-%, nochmals bevorzugt mindestens 90 Gew.-%, bezogen auf die Gesamtmenge der in dem Matrixmaterial enthaltenen Isocyanatgruppen enthaltenen Komponenten, eingesetzt wird. Ganz besonders bevorzugt ist die Komponente (C) die einzige Isocyanatgruppen enthaltene Komponente.

Als weitere Isocyanatgruppen enthaltene Komponenten können die an sich bekannten Polyisocyanate wie aliphatische und aromatische Polyisocyanate, insbesondere Diisocyanate und deren Dimere und Trimere wie Uretdione und Isocyanurate eingesetzt werden. Beispielhaft sei auf Hexamethylendiisocyanat, Octamethylendiisocyanat, Decamethylendiisocyanat, Dodecamethylendiisocyanat, Tetradecamethylendiisocyanat, Trimethylhexan-diisocyanat, Tetramethylhexandiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan, Diisocyanate oder Mischungen aus diesen Polyisocyanaten verwiesen. Bevorzugt werden dabei die an sich bekannten Dimere und/oder Trimeren der genannten Polyisocyanate eingesetzt, das heißt also insbesondere die an sich bekannten und auch im Handel erhältlichen Uretdione und Isocyanurate der oben genannten Polyisocyanate. Bevorzugt werden aliphatische Polyisocyanate eingesetzt. Bevorzugte weitere Polyisocyanate sind Hexamethylendiisocyanat und Isophorondiisocyanat sowie Mischungen hiervon, insbesondere deren unterschiedliche Trimere und Dimere wie Isocyanurate und Uretdione. Die Isocyanatgruppen in diesen Komponenten können frei oder durch bekannte Blockierungsmittel blockiert sein. Bevorzugt sind die Isocyanatgruppen unblockiert (also frei). Dies gilt im Übrigen auch für die oben beschriebene erfindungswesentliche Komponente (C). Das Matrixmaterial enthält also bevorzugt ausschließlich Polyisocyanatgruppen enthaltene Komponenten, welche unblockiert sind, wobei diese bevorzugt ausschließlich in der Härterkomponente eingesetzt werden. Die genannten Polyisocyanate sind im Handel erhältlich. Sofern vorhanden, werden die weiteren Polyisocyanate selbstverständlich bevorzugt in der Härterkomponente eingesetzt. Als Polyisocyanat wird eine Verbindung dann bezeichnet, wenn sie im Mittel mehr als eine Isocyanatgruppe pro Molekül enthält.

Das erfindungsgemäß einzusetzende Matrixmaterial kann ein Molekularsieb oder mehrere Molekularsiebe enthalten. Molekularsieb ist die Bezeichnung für natürliche oder synthetische Zeolithe. Sie weisen bekanntermaßen eine vergleichsweise hohe innere Oberfläche (ca. 600 bis 700 m²/g) und einheitliche Porendurchmesser auf. Dadurch ergibt sich ein relativ starkes Adsorptionsvermögen. Vorzugsweise enthält das Matrixmaterial 1 bis 10 Gew.-%, bezogen auf das Gesamtgewicht der Zusammensetzung, mindestens eines Molekularsiebs. Geeignete Molekularsiebe weisen eine Porengröße von 2 bis 10, vorzugsweise 3 bis 4 Angström auf. Beispielsweise können hochporöse Aluminiumsilicate mit einer Porengröße von 3 Angström eingesetzt werden.

Das erfindungsgemäß einzusetzende Matrixmaterial kann Katalysatoren für die Katalyse der Reaktion von Hydroxylgruppen und Aminogruppen mit Isocyanatgruppen enthalten. Vorzugsweise enthält das Matrixmaterial 0,01 bis 2 Gew.-%, bezogen auf das Gesamtgewicht der Zusammensetzung, mindestens eines Katalysators. Bevorzugt enthält das erfindungsgemäß einzusetzende Matrixmaterial 0,02 bis 1 Gew.-%, jeweils bezogen auf das Gesamtgewicht der Zusammensetzung, mindestens eines Katalysators. Geeignete Katalysatoren sind die bekannten Metallkatalysatoren wie beispielsweise Zinn-, Molybdän-, Zirkon oder Zinkkatalysatoren sowie aminische Katalysatoren wie zum Beispiel 2-(2-Dimethylamino-ethoxy)ethanol. Besonders geeignete Katalysatoren sind Zirkon- und Zinnverbindungen wie insbesondere Dimethylzinndilaurat oder Dibutylzinndilaurat, die, wie alle vorgenannten Katalysatoren, eine Reaktion zwischen Isocyanatgruppen-haltigen Verbindungen (C) und den hydroxylgruppenhaltigen Komponenten (A) und gegebenenfalls vorhandenen amingruppenhaltigen Komponenten (B) katalysieren.

Schließlich können die erfindungsgemäß einzusetzenden Matrixmaterialien auch noch weitere von den bereits beschriebenen Komponenten verschiedene Bestandteile enthalten. Diese Bestandteile umfassen hierbei beispielsweise typische Additive wie Antioxidantien, Entlüftungsmittel, Netzmittel, Dispergiermittel, Verlaufmittel und Entschäumer, beispielsweise solche auf Polysiloxanbasis, Haftvermittler, beispielsweise solche auf Silanbasis, Rheologiehilfsmittel wie Verdickungsmittel, Antiablaufmittel und Thixotropiermittel, Wachse und wachsartige Verbindungen, Biozide, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, aber auch lösliche Farbstoffe, Pigmente sowie weitere Füllstoffe oder Katalysatoren. Der Anteil solcher Bestandteile liegt in den hierfür gängigen Bereichen von beispielsweise 0,1 bis 20 Gew.-%, bezogen auf die Gesamtmenge des Matrixmaterials.

Der Festkörpergehalt des Matrixmaterials kann je nach den Erfordernissen des Einzelfalls variieren, wobei es allerdings von besonderem Vorteil ist, dass das Material Iösemittel- und wasserfrei hergestellt werden kann und trotzdem auf wie unten beschriebene Weise appliziert werden kann. Vorzugsweise liegt der Festkörpergehalt des erfindungsgemäß einzusetzenden Matrixmaterials demzufolge bei größer 80 %, besonders bevorzugt bei größer 85 % und ganz besonders bevorzugt bei 90 bis 98 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird die Zusammensetzung für 60 Minuten bei 130°C eingedampft.

Diese Prüfmethode kann, sofern nicht anders angegeben, ebenfalls angewandt werden, um beispielsweise den Anteil verschiedener Komponenten beziehungsweise Bestandteile des Matrixmaterials, beispielsweise eines Polycarbonatdiols, am Gesamtgewicht der Zusammensetzung festzulegen beziehungsweise vorzubestimmen. Es kann also der Festkörper einer Dispersion einer Komponente, welche der Zusammensetzung zugegeben werden soll, bestimmt werden. Durch Berücksichtigung des Festkörpers der Dispersion und der in dem Matrixmaterial eingesetzten Menge der Dispersion kann dann der Anteil der Komponente an der Gesamtkomposition ermittelt beziehungsweise festgelegt werden. Diese Bestimmungsmethode kann natürlich auch erfolgen, wenn beispielsweise ein Bestandteil kommerziell erworben wird und vom Vertreiber als lösemittel- oder wasserfrei bezeichnet wird. In diesem Fall wird der Festkörper des einzusetzenden Handelsprodukts beispielsweise annähernd 100 % betragen.

In einer bevorzugten Ausführungsform umfasst das einzusetzende Matrixmaterial
(1) in der Stammkomponente
   (A) 15,0 bis 60,0 Gew.-% mindestens eines Polycarbonatdiols,
   (B) 1,0 bis 6,0 Gew.-% mindestens eines sekundäre Aminogruppen aufweisenden Diamins mit einer aliphatischen Gruppe (b1) zwischen den Stickstoffatomen der Aminogruppen
      sowie
(2) in der Härterkomponente
   (C) 30 bis 75 Gew.-% mindestens eines Polyisocyanat-modifizierten Polyesters mit einem Isocyanatgehalt von 4 bis 15 %,
wobei die Gewichtsangaben jeweils auf das Gesamtgewicht des Matrixmaterials bezogen sind.

Innerhalb dieser bevorzugten Ausführungsform sind selbstverständlich alle weiter oben beschriebenen vorteilhaften Varianten, beispielsweise hinsichtlich der Komponenten (A) bis (C) ebenfalls als vorteilhaft anzusehen. Dies gilt für die Kombination der bevorzugten Ausführungsform mit nur einer oder auch mehreren der oben beschriebenen vorteilhaften Varianten.

Bevorzugt ist, dass das Verhältnis der molaren Gesamtmenge von Hydroxylgruppen und Aminogruppen in der Stammkomponente zu der molaren Menge an Isocyanatgruppen in der Härterkomponente von 1,0/0,9 bis 1,0/1,5 liegt. Besonders bevorzugt ist demnach, dass das Verhältnis der molaren Gesamtmenge von Hydroxylgruppen der Komponente (A) und Aminogruppen der Komponente (B) in der Stammkomponente zu der molaren Menge an Isocyanatgruppen in der Härterkomponente den genannten Wert einnimmt.

Bevorzugt ist, dass von den genannten Bestandteilen (A), (B), und (C) jeweils genau ein Bestandteil in dem Matrixmaterial enthalten ist.

Alle angegebenen bevorzugten Ausführungsformen sind für sich genommen und in Kombination mit allen weiteren bevorzugten Ausgestaltungen als bevorzugt anzusehen. Die bevorzugten Ausführungsformen gelten nicht nur für das erfindungsgemäß einzusetzende Matrixmaterial, sondern auch für die ansonsten beschriebenen Gegenstände der vorliegenden Erfindung, beispielsweise das Verfahren, in dem das Matrixmaterial zur Herstellung von Faser-Kunststoff-Verbunden eingesetzt wird.

Im Falle einer möglichen Spezifizierung auf Matrixmaterialien enthaltend bevorzugte Komponenten, beispielsweise bevorzugte Diamine (B), in einem speziellen Anteilsbereich gilt folgendes. Die Diamine (B), die nicht in die bevorzugte Gruppe fallen, können selbstverständlich weiterhin in dem Matrixmaterial enthalten sein. Der spezielle Anteilsbereich gilt dann nur für die bevorzugte Gruppe von Diaminen. Bevorzugt ist allerdings, dass für den Gesamtanteil von Diaminen bestehend aus Diaminen aus der bevorzugten Gruppe und Diaminen (B), die nicht in die bevorzugte Gruppe fallen, ebenfalls der spezielle Anteilsbereich gilt.

Würde also eine Beschränkung auf einen Anteilsbereich von 1,0 bis 7,0 Gew.-% und eine bevorzugte Gruppe von Diaminen durchgeführt werden, so gilt dieser Anteilsbereich augenscheinlich zunächst nur für die bevorzugte Gruppe an Diaminen. Bevorzugt wäre dann aber, dass insgesamt von allen ursprünglich umfassten Diaminen (B) bestehend aus Diaminen aus der bevorzugten Gruppe und Diaminen (B), die nicht in die bevorzugte Gruppe fallen, ebenfalls von 1,0 bis 7,0 Gew.-% enthalten sind. Werden also 6,0 Gew.-% von Diaminen der bevorzugten Gruppe eingesetzt, so können höchstens 1,0 Gew.-% der Diamine (B) der nicht bevorzugten Gruppe eingesetzt werden.

Das genannte Prinzip gilt im Rahmen der vorliegenden Erfindung für alle genannten Bestandteile des Matrixmaterials und deren Anteilsbereiche.

Die Herstellung des erfindungsgemäß einzusetzenden Matrixmaterials stellt keine Besonderheiten dar und kann unter Einsatz der üblichen und bekannten Mischverfahren und Mischaggregate wie Rührkesseln, Rührwerksmühlen, Extrudern oder Knetern erfolgen. Dabei ist aber zu beachten, dass es sich um ein Zweikomponenten-Matrixmaterial handelt und die Stammkomponente sowie die Härterkomponente getrennt voneinander hergestellt und gelagert werden und dann, wie oben beschrieben, erst kurz vor der Verarbeitung des Matrixmaterials zusammengegeben und gemischt werden. Die Stammkomponente umfasst dabei in der Regel neben dem erfindungswesentlichen Bestandteil (A) bevorzugt eine Diamin (B) sowie die gegebenenfalls vorhandenen Zusatzstoffe beziehungsweise Additive. Dieser Stammkomponente wird dann die Härterkomponente, welche neben dem erfindungswesentlichen Bestandteil (C) noch weitere Polyisocyanate enthalten kann, kurz vor der Verarbeitung beigemischt.

Durch den Einsatz des Matrixmaterials resultieren Faser-Matrix-Verbunde, die eine ausgezeichnete Stabilität gegen mechanische Einflüsse, insbesondere gegen punktuelle Belastungen mit hohem Impuls, aufweisen. Daraus folgt, dass ebenfalls die Verwendung der erfindungsgemäßen Faser-Kunststoff-Verbunde zur Verbesserung der mechanischen Stabilität, insbesondere der Stabilität gegenüber hochenergetischen, punktuellen Belastungen, von Bauteilen, Gegenstand der vorliegenden Erfindung ist.

Aus obigem folgt ebenfalls, dass eine Zusammensetzung zur Herstellung von Faser-Kunststoff-Verbunden bestehend aus mindestens einem Fasermaterial und einem wie oben beschriebenen Zweikomponenten-Matrixmaterial ebenfalls Gegenstand der vorliegenden Erfindung ist.

Die Zusammensetzung kann dabei eine einfache Mischung bestehend aus Fasern und Zweikomponenten-Matrixmaterial sein. Ebenfalls möglich ist, dass sich die Zusammensetzung als Faserhalbzeug, beispielsweise eine Fasermatte, welche mit dem Matrixmaterial benetzt beziehungsweise getränkt ist, darstellt. Von Bedeutung ist lediglich, dass es sich um ein System handelt, das aus mindestens einem Fasermaterial und einem Matrixmaterial besteht. Das Gewichtsverhältnis von Fasermaterial zu Matrixmaterial in der erfindungsgemäßen Zusammensetzung kann je nach individuellen Anforderungen variieren und liegt beispielsweise von 1:1 bis 2,5:1, bevorzugt 1,1:1 bis 2:1.

In der Folge wird die vorliegende Erfindung anhand von Beispielen erläutert.

### Beispiele

### 1. Herstellung von Faser-Kunststoff-Verbunden

Zunächst wurden die Stammkomponenten verschiedener Matrixmaterialien durch Zusammengeben der jeweiligen Bestandteile und homogene Vermischung in einem Dissolver hergestellt (Tabelle 1). Die jeweilige Härterkomponente ist ebenfalls in Tabelle 1 aufgeführt.

**Tabelle 1**

| **Bestandteil** | **Gewichtsteile** | | | | | |
|---|---|---|---|---|---|---|
| | **A** | **B** | **C** | **D** | **E** | **F** |
| **Stammkomponente** | | | | | | |
| | | | | | | |
| Lineares, aliphatisches Polycarbonatdiol (A) mit endständigen Hydroxylgruppen, lösemittelfrei, OH Zahl = 225 | 75,5 | 76,0 | 77,0 | 77,5 | 80,0 | 75,5 |
| Diamin (B)¹ | 6,0 | - | 6,0 | 6,0 | 6,0 | 6,0 |
| Diamin (B)² | | 6,0 | | | | |
| Thixotropierungsmittel | 1,0 | 1,0 | 1,0 | 1,0 | 1,0 | 1,0 |
| Molekularsieb | 4,2 | 4,2 | 4,2 | 4,2 | 4,2 | 4,2 |
| Farbpigmente | 5,0 | 5,0 | 5,0 | 5,0 | 5,0 | 5,0 |
| Verlaufsmittel auf Acrylatbasis | 1,0 | 1,0 | - | 1,0 | 1,0 | 1,0 |
| Blockierungsmittel (Chelatbildner) für Metallkatalysatoren | 4,0 | 4,0 | 4,0 | - | - | 4,0 |
| UV-Schutzadditive | 1,8 | 1,8 | 1,8 | 1,8 | 1,8 | 1,8 |
| Katalysator auf Zirkoniumbasis | 0,8 | 0,8 | 0,8 | 3,0 | 1,0 | 1,0 |
| Katalysator auf Zinnbasis | 0,2 | 0,2 | 0,2 | - | - | - |
| Entschäumer | 0,5 | | | 0,5 | | 0,5 |
| | | | | | | |
| **Summe** | **100** | **100** | **100** | **100** | **100** | **100** |
| | | | | | | |

| **Härterkomponente** | | | | | | |
|---|---|---|---|---|---|---|
| Aliphatischer HDI-modifizierter Polyester (C) mit einem Isocyanatgehalt von 8,4 % | 175 | 175 | 175 | 175 | 175 | 175 |
| | | | | | | |
| **Summe** | **275** | **275** | **275** | **275** | **275** | **275** |

| | | | | | | |
|---|---|---|---|---|---|---|
| ¹ Additionsprodukt aus einem Äquivalent Isophorondiamin und 2 Äquivalenten Acrylnitril. ² Mischung aus 3,5-Diethyltoluol-2,4-diamin und 3,5-Diethyltoluol-2,6-diamin (4:1) | | | | | | |

Anschließend wurden die jeweiligen Stammkomponenten A bis F mit den jeweiligen Härterkomponenten in den in der Tabelle angegebenen Mengenverhältnissen homogen vermischt und mit dem so hergestellten Matrixmaterial direkt über das Handlegeverfahren Faser-Kunststoff-Verbunde hergestellt.

Hierzu wurden zunächst Zusammensetzungen zur Herstellung von Faser-Kunststoff-Verbunden hergestellt, und zwar durch Benetzung von als Fasermaterial eingesetzten Fasermatten mit dem jeweiligen Matrixmaterial. Als Fasermatten wurden Aramid-Fasermatten der Fa. Saertex (Artikel-Bezeichnung B-A-416g/m²-1270mm, Material Aramid Teijin Twaron 2200 2.420 dtex) eingesetzt.

Zur eigentlichen Herstellung der Faser-Kunststoffverbunde wurden zunächst die einzelnen benetzten Matten aufeinandergelegt und händisch miteinander verpresst. Insgesamt wurden jeweils 5, 10 oder 20 benetzte Matten miteinander verpresst. Im Anschluss daran wurde zur Herstellung der Faser-Kunststoff-Verbunde das jeweilige Matrixmaterial in den verpressten Matten bei 50°C für 2 h gehärtet.

Der Zeitraum zwischen dem Zusammengeben von jeweiliger Stammkomponente und Härterkomponente einerseits und dem Auflegen und Verpressen der letzten benetzten Fasermatte lag jeweils bei weniger als 3 Minuten. Auf diese Weise konnte eine problemlose Verarbeitung von Fasermatten, die mit noch feuchtem Matrixmaterial benetzt waren, gewährleistet werden.

Das Gewichtsverhältnis von Fasermaterial zu Matrixmaterial lag jeweils bei 1,4:1.

Analog der oben genannten Vorschrift wurden unter Einsatz der oben beschriebenen Fasermatten Vergleichs-Verbunde (5, 10 und 20 Matten) hergestellt, wobei anstelle der erfindungsgemäßen Matrixmaterialien ein Standard-Zweikomponenten-Matrixmaterial auf Basis eines Epoxidharzes (Stammkomponente) und einer Polyamin-Komponente (Härterkomponente) eingesetzt wurde.

Als weiteres Vergleichssystem wurden die oben genannten Fasermatten (5, 10 oder 20 Matten) ohne jegliches Matrixmaterial aufeinandergeschichtet und zwischen zwei herkömmlichen Stofflaken fixiert.

Im Anschluss daran wurden die so hergestellten erfindungsgemäßen Faser-Kunststoff-Verbunde, Vergleichs-Verbunde und lose geschichteten Mattensysteme wie unter 2. beschrieben anwendungstechnisch untersucht.

### 2. Anwendungstechnische Untersuchung

Die entsprechenden Verbunde beziehungsweise lose geschichteten Mattensysteme wurden in eine Haltevorrichtung eingebracht. Anschließend erfolgte ein Belastungstest. Dabei wurden die Verbunde/Mattensysteme aus 10 Metern Entfernung in einem Schusswinkel von 90° (also frontal) mit unterschiedlichen Projektilen beschossen. Die einzelnen Belastungstests wurden in einer Doppelbestimmung durchgeführt.

### Bewertung:

+ = Projektil hat den Verbund/das Mattensystem nicht durchschlagen.
o = Projektil hat den Verbund/das Mattensystem fast durchschlagen (bemerkbare Auswölbung im Verbund/Mattensystem).
- = Projektil hat den Verbund/das Mattensystem durchschlagen.

Tabelle 2 zeigt die entsprechenden Ergebnisse.

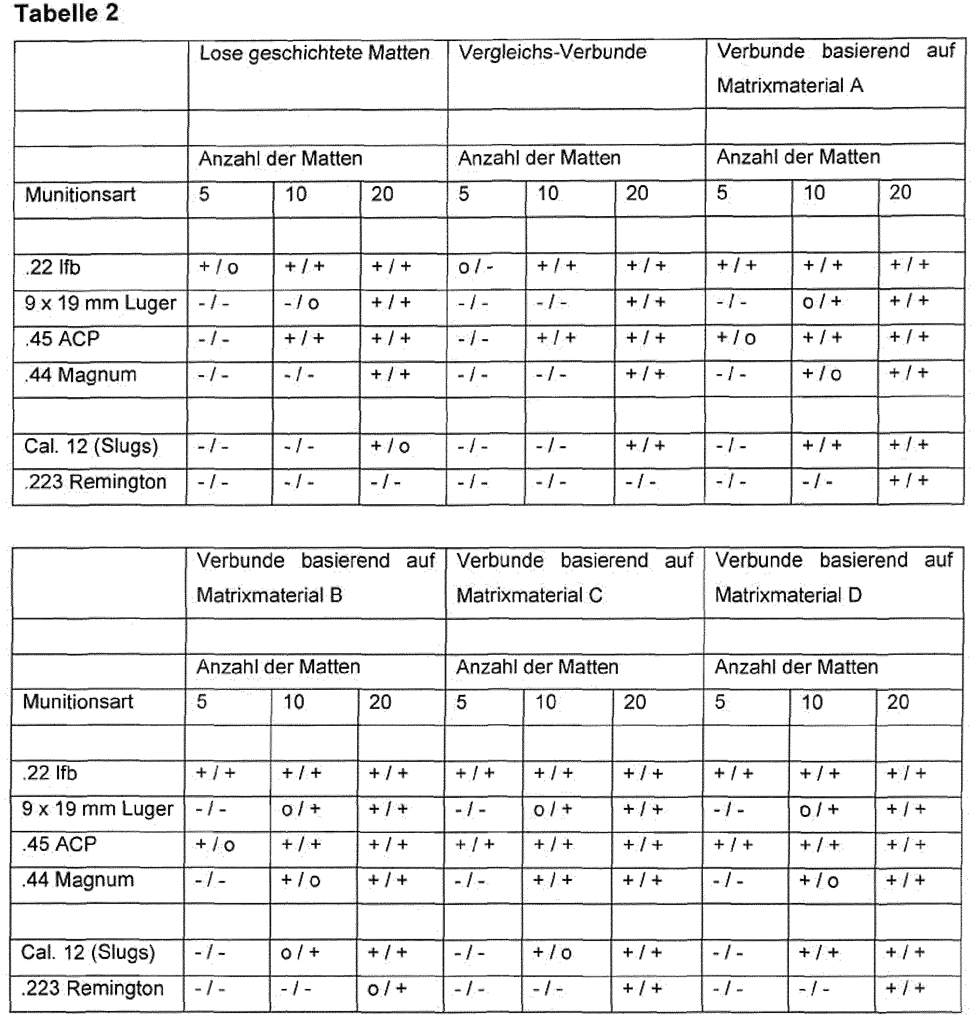

Die Ergebnisse zeigen, dass die erfindungsgemäßen Systeme eine deutlich verbesserte Stabilität gegen punktuelle Belastungen mit hohem Impuls aufweisen, als die Vergleichs-Verbunde oder die lose geschichteten Matten.

## Patentansprüche

1. Faser-Kunststoff-Verbunde bestehend aus
(I) mindestens einem Fasermaterial
und
(II) einer Kunststoffmatrix,
**dadurch gekennzeichnet, dass** die Kunststoffmatrix auf einem Zweikomponenten-Matrixmaterial (IIa) basiert, wobei das Zweikomponenten-Matrixmaterial (IIa)
(1) eine Stammkomponente umfassend
(A) mindestens ein Polycarbonatdiol mit einer OH-Zahl von 50 bis 500 mg KOH/g
sowie
(2) eine Härterkomponente umfassend
(C) mindestens einen Polyisocyanat-modifizierten Polyester mit einem Isocyanatgehalt von 4 bis 15 %
umfasst.

2. Faser-Kunststoff-Verbund gemäß Anspruch 1, **dadurch gekennzeichnet, dass** der Polyisocyanat-modifizierte Polyester (C) ein Hexamethylendiisocyanat-modifizierter Polyester ist.

3. Faser-Kunststoff-Verbund gemäß einem der Ansprüche 1 oder 2, **dadurch gekennzeichnet, dass** der Polyisocyanat-modifizierte Polyester (C) durch Umsetzung von Hexamethylendiisocyanat mit einem hydroxyfunktionellen aliphatischen Polyester herstellbar ist.

4. Faser-Kunststoff-Verbund gemäß einem der Ansprüche 1 bis 3, **dadurch gekennzeichnet, dass** der für die Umsetzung eingesetzte hydroxyfunktionelle aliphatische Polyester ein Polycaprolactonpolymer ist.

5. Faser-Kunststoff-Verbund gemäß einem der Ansprüche 1 bis 4, **dadurch gekennzeichnet, dass** die Stammkomponente (1) weiterhin mindestens ein aliphatisches, aromatisches oder araliphatisches Diamin (B) mit primären und/oder sekundären Aminogruppen umfasst.

6. Faser-Kunststoff-Verbund gemäß Anspruch 5, **dadurch gekennzeichnet, dass** das Diamin (B) ein sekundäre Aminogruppen aufweisendes Diamin mit einer aliphatischen Gruppe (b1) zwischen den Stickstoffatomen der Aminogruppen ist.

7. Faser-Kunststoff-Verbund gemäß Anspruch 5 oder 6, **dadurch gekennzeichnet, dass** das mindestens eine Diamin (B) eine Aminzahl von 300 bis 500 mg KOH/g aufweist.

8. Faser-Kunststoff-Verbund gemäß Anspruch 7, **dadurch gekennzeichnet, dass** das Diamin (B) die folgende Formel (FII) hat:
(b2)-NH-(b1)-NH-(b2) (FII)
mit
(b1) = aliphatische Gruppe mit 4 bis 30 Kohlenstoffatomen, insbesondere bevorzugt cycloaliphatische Gruppe mit 6 bis 18 Kohlenstoffatomen,
(b2) = unabhängig voneinander, -CH₂CH₂-CN und/oder -CH₂CH₂-C(O)-O-CₙH₂ₙ₊₁ mit n = 1 bis 6, bevorzugt -CH₂CH₂-CN.

9. Verfahren zur Herstellung von Faser-Kunststoff-Verbunden nach einem der Ansprüche 1 bis-8 umfassend (i) das Inkontaktbringen eines Zweikomponenten-Matrixmaterials (IIa) mit einem Fasermaterial und (ii) die anschließende Ausbildung einer Kunststoffmatrix durch Härtung des Matrixmaterials, wobei das Zweikomponenten-Matrixmaterial (IIa)
(1) eine Stammkomponente umfassend
(A) mindestens ein Polycarbonatdiol
sowie
(2) eine Härterkomponente umfassend
(C) mindestens einen Polyisocyanat-modifizierten Polyester mit einem Isocyanatgehalt von 4 bis 15 %
umfasst.

10. Verfahren nach Anspruch 9, **dadurch gekennzeichnet, dass** die Härtung bei einer Temperatur von nicht mehr als 80°C, bevorzugt 15 bis 60°C, erfolgt.

11. Zusammensetzung zur Herstellung von Faser-Kunststoff-Verbunden bestehend aus
(I) mindestens einem Fasermaterial
und
(IIa) einem Zweikomponenten-Matrixmaterial,
**dadurch gekennzeichnet, dass** das Zweikomponenten-Matrixmaterial (IIa)
(1) eine Stammkomponente umfassend
(A) mindestens ein Polycarbonatdiol mit einer OH-Zahl von 50 bis 500 mg KOH/g
sowie
(2) eine Härterkomponente umfassend
(C) mindestens einen Polyisocyanat-modifizierten Polyester mit einem Isocyanatgehalt von 4 bis 15 %
umfasst.

12. Bauteil, welches aus einem Faser-Kunststoff-Verbund nach einem der Ansprüche 1-8 besteht oder einen solchen umfasst.

13. Bauteil nach Anspruch 12, **dadurch gekennzeichnet, dass** es sich um ein Rotorblätter von Windenergieanlagen, ein Fahrzeugbauteil oder eine Sicherheitsweste handelt.

14. Verwendung eines Faser-Kunststoff-Verbunds nach einem der Ansprüche 1 bis 8 zur Verbesserung der mechanischen Stabilität, insbesondere der Stabilität gegenüber hochenergetischen, punktuellen Belastungen, von Bauteilen.

## Claims

1. Fibre-plastic composite consisting of
(I) at least one fibre material
and
(II) a plastics matrix,
**characterized in that** the plastics matrix is based on a two-component matrix material (IIa), wherein the two-component matrix material (IIa) comprises
(1) a base component comprising
(A) at least one polycarbonate diol having an OH number of 50 to 500 mg KOH/g
and
(2) a hardener component comprising
(C) at least one polyisocyanate-modified polyester having an isocyanate content of 4% to 15%.

2. Fibre-plastic composite according to Claim 1, **characterized in that** the polyisocyanate-modified polyester (C) is a hexamethylene diisocyanate-modified polyester.

3. Fibre-plastic composite according to either of Claims 1 and 2, **characterized in that** the polyisocyanate-modified polyester (C) is preparable by reacting hexamethylene diisocyanate with a hydroxy-functional aliphatic polyester.

4. Fibre-plastic composite according to any of Claims 1 to 3, **characterized in that** the hydroxy-functional aliphatic polyester used for the reaction is a polycaprolactone polymer.

5. Fibre-plastic composite according to any of Claims 1 to 4, **characterized in that** the base component (1) furthermore comprises at least one aliphatic, aromatic or araliphatic diamine (B) having primary and/or secondary amino groups.

6. Fibre-plastic composite according to Claim 5, **characterized in that** the diamine (B) is a diamine having secondary amino groups and having an aliphatic group (b1) between the nitrogen atoms of the amino groups.

7. Fibre-plastic composite according to Claim 5 or 6, **characterized in that** the at least one diamine (B) has an amine number of 300 to 500 mg KOH/g.

8. Fibre-plastic composite according to Claim 7, **characterized in that** the diamine (B) has the following formula (FII):
(b2)-NH-(b1)-NH-(b2) (FII)
where
(b1) = aliphatic group having 4 to 30 carbon atoms, especially preferably cycloaliphatic group having 6 to 18 carbon atoms,
(b2) = independently of one another, -CH₂CH₂-CN and/or -CH₂CH₂-C(O)-O-CₙH_{2n+1,} where n = 1 to 6, preferably -CH₂CH₂-CN.

9. Process for preparing fibre-plastic composites according to any of Claims 1 to 8, comprising (i) contacting a two-component matrix material (IIa) with a fibre material and (ii) subsequently forming a plastics matrix by curing the matrix material, wherein the two-component matrix material (IIa) comprises
(1) a base component comprising
(A) at least one polycarbonate diol
and
(2) a hardener component comprising
(C) at least one polyisocyanate-modified polyester having an isocyanate content of 4% to 15%.

10. Process according to Claim 9, **characterized in that** the curing is effected at a temperature of not more than 80°C, preferably 15 to 60°C.

11. Composition for preparing fibre-plastic composites consisting of
(I) at least one fibre material
and
(IIa) a two-component matrix material,
**characterized in that** the two-component matrix material (IIa) comprises
(1) a base component comprising
(A) at least one polycarbonatediol having an OH number of 50 to 500 mg KOH/kg
and
(2) a hardener component comprising
(C) at least one polyisocyanate-modified polyester having an isocyanate content of 4% to 15%.

12. Component consisting of or comprising a fibre-plastic composite according to any of Claims 1-8.

13. Component according to Claim 12, **characterized in that** it is a rotor blades of wind turbines, a vehicle component or a safety jacket.

14. Use of a fibre-plastic composite according to any of Claims 1 to 8 for improving mechanical stability of components, especially stability with respect to high-energy point loads.

## Revendications

1. Composites fibres-matière plastique constitués par :
(I) au moins un matériau fibreux
et
(II) une matrice en matière plastique,
**caractérisés en ce que** la matrice en matière plastique est à base d'un matériau de matrice bicomposant (IIa), le matériau de matrice bicomposant (IIa) comprenant :
(1) un composant de base comprenant :
(A) au moins un polycarbonate-diol ayant un indice OH de 50 à 500 mg de KOH/g,
et
(2) un composant durcisseur comprenant :
(C) au moins un polyester modifié par un polyisocyanate ayant une teneur en isocyanate de 4 à 15 %.

2. Composite fibres-matière plastique selon la revendication 1, **caractérisé en ce que** le polyester modifié par un polyisocyanate (C) est un polyester modifié par du diisocyanate d'hexaméthylène.

3. Composite fibres-matière plastique selon l'une quelconque des revendications 1 ou 2, **caractérisé en ce que** le polyester modifié par un polyisocyanate (C) peut être fabriqué par mise en réaction de diisocyanate d'hexaméthylène avec un polyester aliphatique à fonction hydroxy.

4. Composite fibres-matière plastique selon l'une quelconque des revendications 1 à 3, **caractérisé en ce que** le polyester aliphatique à fonction hydroxy utilisé pour la réaction est un polymère de polycaprolactone.

5. Composite fibres-matière plastique selon l'une quelconque des revendications 1 à 4, **caractérisé en ce que** le composant de base (1) comprend en outre au moins une diamine aliphatique, aromatique ou araliphatique (B) contenant des groupes amino primaires et/ou secondaires.

6. Composite fibres-matière plastique selon la revendication 5, **caractérisé en ce que** la diamine (B) est une diamine comprenant des groupes amino secondaires contenant un groupe aliphatique (b1) entre les atomes d'azote des groupes amino.

7. Composite fibres-matière plastique selon la revendication 5 ou 6, **caractérisé en ce que** ladite au moins une diamine (B) présente un indice d'amine de 300 à 500 mg de KOH/g.

8. Composite fibres-matière plastique selon la revendication 7, **caractérisé en ce que** la diamine (B) a la formule (FII) suivante :
(b2)-NH-(b1)-NH-(b2) (FII)
avec
(b1) = groupe aliphatique de 4 à 30 atomes de carbone, de manière particulièrement préférée groupe cycloaliphatique de 6 à 18 atomes de carbone,
les (b2) = indépendamment les uns des autres, -CH₂CH₂-CN et/ou -CH₂CH₂-C(O)-O-CₙH₂ₙ₊₁ avec n = 1 à 6, de préférence -CH₂CH₂-CN.

9. Procédé de fabrication de composites fibres-matière plastique selon l'une quelconque des revendications 1 à 8, comprenant (i) la mise en contact d'un matériau de matrice bicomposant (IIa) avec un matériau fibreux, puis (ii) la formation d'une matrice de matière plastique par durcissement du matériau de matrice, le matériau de matrice bicomposant (IIa) comprenant :
(1) un composant de base comprenant :
(A) au moins un polycarbonate-diol,
et
(2) un composant durcisseur comprenant :
(C) au moins un polyester modifié par un polyisocyanate ayant une teneur en isocyanate de 4 à 15 %.

10. Procédé selon la revendication 9, **caractérisé en ce que** le durcissement a lieu à une température non supérieure à 80 °C, de préférence de 15 à 60 °C.

11. Composition pour la fabrication de composites fibres-matière plastique, constituée par :
(I) au moins un matériau fibreux
et
(IIa) un matériau de matrice bicomposant,
**caractérisée en ce que** le matériau de matrice bicomposant (IIa) comprend :
(1) un composant de base comprenant :
(A) au moins un polycarbonate-diol ayant un indice OH de 50 à 500 mg de KOH/g,
et
(2) un composant durcisseur comprenant :
(C) au moins un polyester modifié par un polyisocyanate ayant une teneur en isocyanate de 4 à 15 %.

12. Composant, qui est constitué par un composite fibres-matière plastique selon l'une quelconque des revendications 1 à 8 ou comprend un tel composite.

13. Composant selon la revendication 12, **caractérisé en ce qu'**il s'agit d'une pales de rotor d'éoliennes, d'un composant de véhicule ou d'un gilet de sécurité.

14. Utilisation d'un composite fibres-matière plastique selon l'une quelconque des revendications 1 à 8 pour améliorer la stabilité mécanique, notamment la stabilité à des sollicitations ponctuelles de haute énergie, de composants.
